# FASCICULE DE BREVET EUROPEEN

(11) **EP 2 402 184 B1**
(45) Date de publication et mention de la délivrance du brevet: **18.09.2013**
(21) Numéro de dépôt: 11305858.0
(22) Date de dépôt: 04.07.2011
(51) Int. Cl.: B60H 1/00, B60H 1/32, F25B 47/02, F25D 21/00

(54) **Système et procédé de commande d'un ventilateur dans un véhicule automobile**
Steuersystem und -verfahren eines Ventilators in einem Kraftfahrzeug
System and method for controlling a fan in an automobile

(30) Priorité: 02.07.2010 FR 1055392
(43) Date de publication de la demande: 04.01.2012
(73) Titulaire: Renault S.A.S., 92100 Boulogne-Billancourt (FR)
(72) Inventeur: Janier, Benoit, 92370 Chaville (FR); Baduel, Olivier, 91790 BOISSY SOUS SAINT YON (FR); Pasquini, Myriam, 75014 Paris (FR); David, Pascal, 78960 VOISINS LE BRETONNEUX (FR)

(56) Documents cités:
- EP-A1- 1 108 575
- WO-A1-2004/028841
- US-A- 4 178 767
- US-A1- 2009 293 512

## Description

L'invention concerne les ventilateurs adaptés dans des véhicules automobiles à propulsion thermique, électrique ou hybride, comme montrés dans WO 2004/028841 A1.

Plus particulièrement l'invention concerne les pompes à chaleur comprenant un système et un procédé de commande du ventilateur présent dans la pompe à chaleur.

Les pompes à chaleur sont utilisées afin de réchauffer l'habitacle du véhicule. La plupart du temps, les pompes à chaleur intègrent une double fonction, d'une part de chauffage de l'habitacle et d'autre part de refroidissement de l'habitacle. Un système unique de climatisation et de chauffage permet de réduire les espaces utilisés par la ventilation.

Une pompe à chaleur comprend en général un évaporateur, un compresseur, un condenseur, un détendeur et un fluide frigorigène traversant ces composants. Dans le cas du chauffage du véhicule, l'évaporateur réchauffe le fluide frigorigène et refroidit l'air extérieur, le compresseur assure la compression du fluide frigorigène à l'état gazeux, le condenseur refroidit le fluide frigorigène et réchauffe l'air intérieur et le détendeur réduit la pression du fluide frigorigène à l'état liquide. Un ventilateur peut être placé en amont du condenseur afin de souffler l'air chaud à l'intérieur de l'habitacle. Le ventilateur peut également être placé en aval du condenseur. Lorsque le fluide frigorigène traverse l'évaporateur, il prélève de la chaleur à l'air extérieur et se réchauffe ; l'air extérieur étant refroidi, cela peut engendrer un risque de gel du ventilateur. Les pompes à chaleur doivent donc intégrer un système permettant de dégeler les ventilateurs.

On a déjà tenté, dans l'état de la technique, d'atteindre cet objectif.

On pourra à cet égard se référer au document US 4178767 qui décrit un système de dégel des pales d'un ventilateur adapté à une pompe à chaleur dans lequel le flux du fluide frigorigène est inversé lorsque les pales du ventilateur sont gelées, de manière à basculer la pompe à chaleur en mode climatisation. L'échangeur externe devient un condenseur, le fluide frigorigène est refroidi et l'air extérieur est réchauffé afin de dégeler les pales du ventilateur.

Les solutions proposées dans l'état de la technique ne permettent pas de mettre en oeuvre un système permettant d'éviter au maximum le gel du ventilateur et de dégeler celui-ci sans nécessairement basculer la pompe à chaleur en mode climatisation.

L'objectif de l'invention est donc de pallier ces inconvénients et de fournir un système et un procédé de commande d'un ventilateur dans une pompe à chaleur permettant d'éviter le gel du ventilateur et de surveiller son fonctionnement.

L'invention concerne un système de commande d'un ventilateur dans un véhicule automobile, le ventilateur coopérant avec au moins un échangeur de chaleur dans lequel circule un fluide frigorigène. Le système de commande d'un ventilateur comprend un moyen de détermination de la température extérieure, un moyen de détermination de la température entre l'échangeur externe et le ventilateur et une unité de contrôle électronique. L'unité de contrôle électronique comprend une cartographie de détermination de zones à risque de gel en fonction de la température extérieure et de la température en amont du ventilateur, un dispositif de commande du ventilateur en fonction du risque de gel et un dispositif de contrôle du ventilateur. Le dispositif de commande du ventilateur est apte à activer le ventilateur en fonction du risque de gel déterminé par la cartographie.

Ainsi, dès qu'un risque de gel est détecté, le ventilateur est mis en route de façon à assurer une répartition homogène du givre sur les pales du ventilateur et d'éviter son blocage par la création d'un pont de glace.

Le dispositif de contrôle du ventilateur peut comprendre un moyen de détermination d'une différence de vitesses de rotation entre la vitesse de rotation du ventilateur et une valeur de consigne de vitesse de rotation, un moyen de comparaison de la différence de vitesses de rotation avec une valeur seuil, un moyen d'activation apte à fournir une vitesse de rotation au ventilateur supérieure à la valeur de consigne de vitesse de rotation. De cette manière, le dispositif de contrôle crée une demande de vitesse de rotation brusque de manière à créer un à coup de couple et éventuellement rompre le blocage créé par du givre éventuel.

Avantageusement, le ventilateur peut être adapté à un dispositif de pompe à chaleur comprenant un échangeur de chaleur externe, un échangeur de chaleur interne dans lesquels circule un fluide frigorigène, le ventilateur étant situé entre lesdits échangeurs de chaleur.

Par exemple, l'échangeur de chaleur externe est un évaporateur dans lequel le fluide frigorigène prélève de la chaleur à l'air extérieur et l'échangeur de chaleur interne est un condenseur dans lequel le fluide frigorigène libère de la chaleur à l'air intérieur.

En outre, le dispositif de contrôle peut comprendre un moyen de dégivrage apte à faire fonctionner l'échangeur externe en tant que condenseur et l'échangeur interne en tant qu'évaporateur. En d'autres termes, la pompe à chaleur est basculée en mode climatisation de manière à envoyer de l'air chaud sur le ventilateur et à faire fondre le givre déposé sur ses pales.

Selon au second aspect, l'invention concerne un procédé de commande d'un ventilateur dans un véhicule automobile, le ventilateur coopérant avec au moins un échangeur de chaleur dans lequel circule un fluide frigorigène.

Le procédé de commande comprend une étape de détermination de la température extérieure, une étape de détermination de la température entre l'échangeur de chaleur et le ventilateur, et une étape d'activation du ventilateur en fonction de la température extérieure, de la température entre l'échangeur de chaleur et le ventilateur, une étape de détermination de zones à risque de gel à partir d'une cartographie en fonction de la température extérieure et de la température en amont du ventilateur, une étape de commande du ventilateur en fonction du risque de gel et une étape de contrôle de la vitesse de rotation du ventilateur.

Par exemple, on détermine une différence de vitesse de rotation entre la vitesse de rotation du ventilateur et une valeur de consigne de vitesse de rotation, et on compare la différence de vitesses de rotation avec une valeur seuil.

Lorsque la différence de vitesses rotation est supérieure à la valeur seuil, on fournit une vitesse de rotation au ventilateur supérieure à la valeur de consigne de vitesse de rotation, de manière à créer un à coup de couple et on compare à nouveau la différence de vitesse de rotation avec la valeur seuil.

Avantageusement, le ventilateur peut être adapté à un dispositif de pompe à chaleur comprenant un échangeur de chaleur externe, un échangeur de chaleur interne dans lesquels circule un fluide frigorigène, le ventilateur étant situé entre lesdits échangeurs de chaleur.

Par exemple, on fait fonctionner l'échangeur de chaleur externe en tant qu'évaporateur de manière à prélever de la chaleur à l'air extérieur et l'échangeur de chaleur interne en tant que condenseur de manière à libérer de la chaleur à l'air intérieur.

En outre, on active un moyen de dégivrage apte à faire fonctionner l'échangeur externe en tant que condenseur et l'échangeur interne en tant qu'évaporateur.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente très schématiquement les principaux éléments d'une pompe à chaleur selon l'invention ;
- la figure 2 illustre des zones de risque de gel du ventilateur de la figure 1 ;
- la figure 3 représente schématiquement le fonctionnement d'un dispositif de commande du ventilateur de la figure 1 en fonction du risque de gel déterminé par la stratégie de commande de la figure 2 ;
- La figure 4 représente schématiquement le fonctionnement d'un dispositif de contrôle du ventilateur de la figure 1.

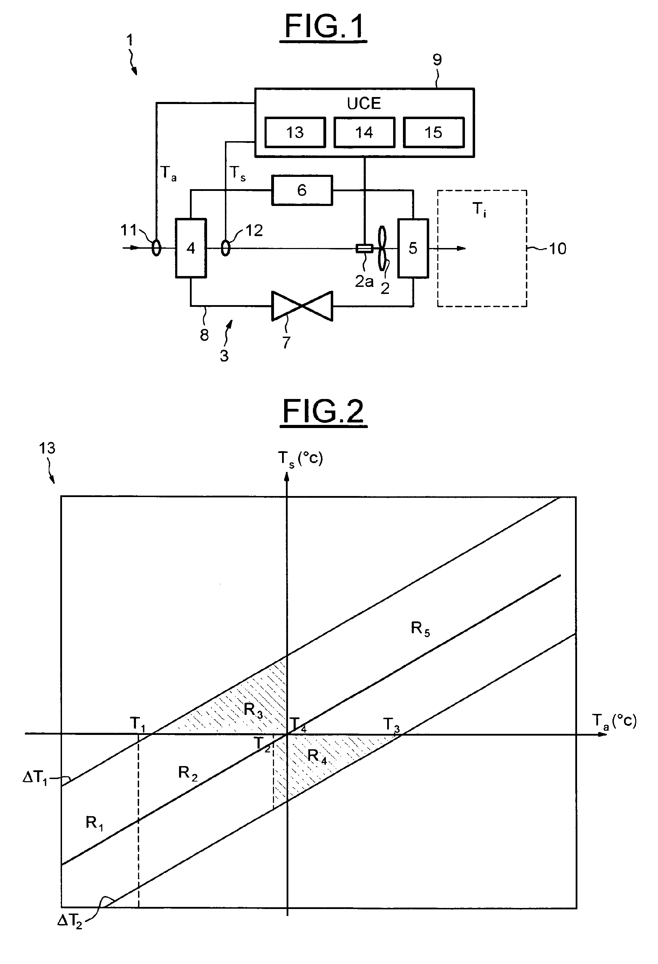

Tel qu'illustré à la figure 1, le système de commande 1 d'un ventilateur 2 adapté à une pompe à chaleur 3 illustré à la figure 1 comprend deux échangeurs de chaleur externe et interne 4, 5, un compresseur 6 et un détendeur 7. La pompe à chaleur 3 comprend un fluide frigorigène (non représenté) circulant dans un conduit 8 reliant les échangeurs 4, 5, le compresseur 6 et le détendeur 7.

Le ventilateur 2 se situe entre les échangeurs externes et internes 4, 5 dans l'axe du flux d'air. Le ventilateur 2 est commandé par un moteur 2a relié à une unité de commande électronique 9.

Lorsque la pompe à chaleur 3 est destinée à réchauffer l'air intérieur Tᵢ de l'habitacle 10 du véhicule (non représenté), l'échangeur externe 4 fonctionne en tant qu'évaporateur et l'échangeur interne 5 fonctionne en tant que condenseur. Le fluide frigorigène circule de l'évaporateur 4 à travers le compresseur 6, puis dans le condenseur 5 et dans le détendeur 7 pour revenir à l'évaporateur 4. Le fluide frigorigène circulant dans la pompe à chaleur 3 subit un cycle de transformation composé de quatre étapes :
Lorsque le fluide frigorigène traverse l'évaporateur 4, il va prélever la chaleur au fluide secondaire qui est l'air extérieur Tₐ en passant de l'état liquide à l'état gazeux. La température de l'air Tₛ situé en aval de l'évaporateur et en amont du ventilateur 2 devient inférieure à la température de l'air extérieur Tₐ. Le fluide frigorigène traverse ensuite le compresseur 6 apte à comprimer le fluide frigorigène gazeux. A la sortie du compresseur 6, le fluide frigorigène est gazeux et a une température élevée. Dans le condenseur 5, le fluide frigorigène passe de l'état gazeux à l'état liquide et cède de l'énergie transférée au fluide secondaire qui est l'air intérieur Tᵢ sous forme de chaleur. A la sortie du condenseur 5, la température du fluide frigorigène est fortement diminuée. Le fluide frigorigène est ensuite détendu dans le détendeur 7.

A l'inverse, lorsque la pompe à chaleur est destinée à refroidir l'air intérieur Tᵢ de l'habitacle 10 du véhicule (non représenté), le débit du fluide frigorigène est inversé et le fluide circule du condenseur 4 à travers le détendeur 7, puis dans l'évaporateur 5 et dans le compresseur 6 pour revenir au condenseur 4. L'échangeur externe 4 fonctionne en tant que condenseur et l'échangeur interne 5 fonctionne en tant qu'évaporateur.

Le ventilateur 2 alimenté par le moteur électrique 2a est situé en aval de l'échangeur de chaleur externe 5 de manière à souffler l'air réchauffé ou refroidi Tᵢ dans l'habitacle 10 du véhicule.

Le système de commande 1 du ventilateur 2 comprend des moyens de détermination 11, 12 de la température extérieure Tₐ et de la température Tₛ entre l'échangeur externe 4 et le ventilateur 2. Les moyens de détermination 11, 12 des températures Tₐ et Tₛ peuvent être des capteurs de température. L'unité de contrôle électronique 9 comprend une cartographie 13 de zones à risque de gel en fonction de la température extérieure Tₐ et de la température Tₛ en amont du ventilateur, un dispositif de commande 14 du ventilateur 2 en fonction du risque de gel déterminé par la cartographie 13 et un dispositif de contrôle 15 du ventilateur 2. Dès qu'un risque de gel est détecté, le ventilateur 2 est activé afin d'éviter l'accumulation de givre de façon non homogène sur les pales du ventilateur 2 et la formation d'un pont de glace.

La figure 2 illustre la cartographie 13 des zones de risque de gel du ventilateur 2 illustré à la figure 1. En ordonnées, on trouve la température Tₛ située entre l'échangeur externe 4 et le ventilateur 2, exprimée en degrés Celsius, et en abscisses, on trouve la température extérieure Tₐ située en amont de l'échangeur externe 4, exprimée en degrés Celsius. ΔT représente la différence de températures (Tₛ-Tₐ) entre les températures extérieure Tₐ et en amont du ventilateur Tₛ. La droite ΔT₁ représente la différence de température (Tₛ-Tₐ) maximale acceptée par la pompe à chaleur 3 illustrée à la figure 1 et la droite Δ T₂ représente la différence de température (Tₛ-Tₐ) minimale acceptée par la pompe à chaleur 3. La zone définie entre les droites ΔT₁ et ΔT₂ représente la zone de fonctionnement de la pompe à chaleur 3. En dehors de la zone définie entre les droites ΔT₁ et ΔT₂, la pompe à chaleur 3 ne peut pas fonctionner.

Différentes zones de risque de gel R sont déterminées. Notons T₁, T₂ et T₃ respectivement premières, deuxièmes et troisièmes valeurs seuil de la température extérieure Tₐ et T₄ la valeur seuil de la température Tₛ en amont du ventilateur 2. Les premières et deuxièmes valeurs seuil T₁, T₂ sont des températures négatives alors que les troisièmes et quatrièmes valeurs seuil T₃, T₄ sont des températures positives ou égale à zéro. Les valeurs de seuils T₁ et T₂ définissent des axes verticaux en pointillés.

Les zones de risques R₁, R₂, R₃, R₄ et R₅ sont définies dans la zone située entre les droites ΔT₁ et ΔT_{2.} La zone R₁ est située en amont de l'axe vertical de la première valeur seuil T₁. Lorsque la température extérieure Tₐ est inférieure à la première valeur seuil T₁, le risque de gel est inexistant. La zone R₁ définit une zone sans risque de gel.

La zone R₂ est située entre les axes verticaux de la première et de la deuxième valeur seuil T₁, T₂. Lorsque la température extérieure Tₐ est comprise entre les premières et deuxièmes valeurs seuil T₁, T₂, et que la température en amont du ventilateur Tₛ est inférieure à la quatrième valeur seuil T₄, le risque de gel est faible. La zone R₂ définit une zone à faible risque de gel. En effet, des projections d'eau liquide ou de givre sur le véhicule restent possibles, mais le risque est faible.

La zone R₃ forme un triangle délimité par l'axe des abscisses Tₐ, l'axe des ordonnées Tₛ et la droite ΔT_{1.} Lorsque la température extérieure Tₐ est inférieure ou égale à zéro, et que la température en amont du ventilateur Tₛ est supérieure ou égale à T₄, le risque de gel est très fort. La zone R₃ définit une zone à fort risque de gel. En effet, si la température extérieure Tₐ est négative, l'échangeur externe peut être givré, son dégivrage peut entraîner la présence de gouttelettes d'eau sur le ventilateur 2. Et si le ventilateur 2 cesse de fonctionner, la température extérieure Tₐ étant inférieure à zéro, les gouttelettes d'eau seront gelées.

La zone R₄ forme un triangle délimité par l'axe des abscisses Tₐ, l'axe vertical de la deuxième valeur de seuil T₂ et la droite ΔT_{2.} Lorsque la température extérieure Tₐ est supérieure ou égale à la deuxième valeur seuil T₂, et que la température en amont du ventilateur Tₛ est inférieure ou égale à T₄, le risque de gel est très fort. La zone R₄ définit une zone à fort risque de gel. En effet, l'air refroidi par l'évaporateur, en se refroidissant, perd son humidité, laquelle se transforme en eau. Au contact de l'air en amont du ventilateur Tₛ, dont la température est inférieure ou égale à zéro, l'humidité va se transformer en givre et se déposer sur les pales du ventilateur.

La zone R₅ correspond à une zone où les températures extérieures Tₐ et en amont du ventilateur Tₛ sont toutes les deux positives. La zone R₅ définit une zone sans risque de gel.

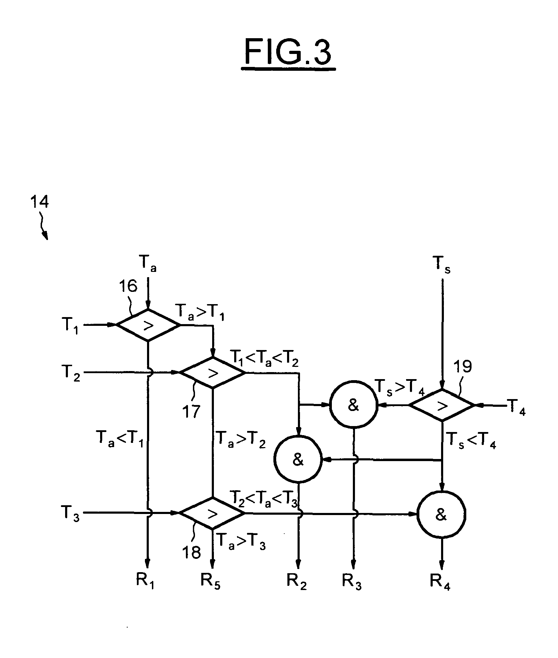

Le dispositif de commande 14 du ventilateur 2 en fonction du risque de gel déterminé par la cartographie 13 de la figure 2 est illustré à la figure 3.

La valeur de la température extérieure Tₐ est comparée à chacune des premières, deuxièmes et troisièmes valeurs seuil T₁, T₂ et T₃ respectivement dans des moyens de comparaison 16, 17 et 18. La valeur de la température extérieure Tₐ et la première valeur seuil T₁ entrent dans le premier comparateur 16. Si la valeur de la température Tₐ est inférieure à la valeur seuil T₁, cela correspond à la zone R₁ de la figure 1, qui représente une zone sans risque de gel. Le ventilateur 2 n'est donc pas mis en route.

Si la valeur de la température Tₐ est supérieure à la valeur seuil T₁, la valeur Tₐ est comparée à la deuxième valeur seuil T₂ dans le comparateur 17. Si la valeur de la température Tₐ est supérieure à la valeur seuil T₂, la valeur Tₐ est comparée à la troisième valeur seuil T₃ dans le comparateur 18. Si la valeur de la température Tₐ est supérieure à la valeur seuil T₃, cela correspond à la zone R₅ de la figure 1, qui représente une zone sans risque de gel. Le ventilateur 2 n'est donc pas mis en route.

La valeur de la température en amont du ventilateur Tₛ est comparée à la quatrième valeur seuil T₄ dans un moyen de comparaison 19. Si la valeur de la température Tₛ est supérieure à la quatrième valeur seuil T₄ et que la valeur de la température Tₐ est comprise entre les valeurs seuils T₁ et T₂, cela correspond à la zone R₃ de la figure 1, qui représente une zone à fort risque de gel. Le ventilateur 2 est donc mis en route.

Si la valeur de la température Tₛ est inférieure à la quatrième valeur seuil T₄ et que la valeur de la température Tₐ est comprise entre les valeurs seuils T₁ et T₂, cela correspond à la zone R₂ de la figure 1, qui représente une zone à faible risque de gel. Le ventilateur 2 est mis en route à une vitesse de rotation faible. La vitesse de rotation du ventilateur peut être définie en fonction du risque de gel.

Si la valeur de la température Tₛ est inférieure à la quatrième valeur seuil T₄ et que la valeur de la température Tₐ est comprise entre les valeurs seuils T₂ et T₃, cela correspond à la zone R₄ de la figure 1, qui représente une zone à fort risque de gel. Le ventilateur 2 est donc mis en route.

Le ventilateur 2 de la figure 1 est donc activé dès qu'un risque de gel est détecté par le dispositif de commande 14.

On pourra prévoir, une identification des zones à risques plus précise afin de définir des vitesses de rotations du ventilateur plus faibles et ainsi de réduire l'usure, la consommation d'énergie et le la nuisance sonore.

Lorsque le risque de gel est déterminé par la cartographie 13 et que le ventilateur 2 est activé ou non par le dispositif de commande 14, un dispositif de contrôle 15 vérifie le fonctionnement du ventilateur et ajuste sa vitesse de rotation ω en fonction d'un écart entre la vitesse de rotation réelle du ventilateur et la valeur de consigne ω*_{C}* de la vitesse de rotation du ventilateur fournie par le dispositif de commande 14.

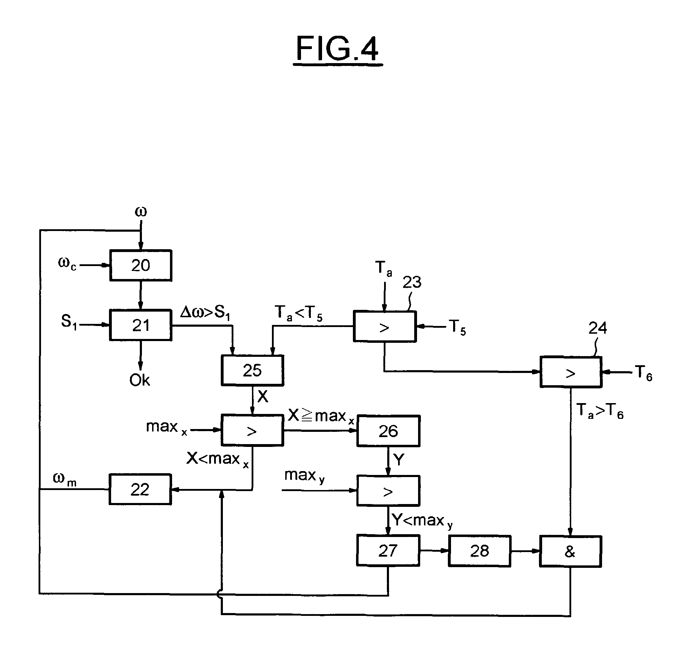

Le fonctionnement schématique du dispositif de contrôle 15 du ventilateur 2 est illustré à la figure 4.

Le dispositif de contrôle 15 comprend un module 20 de calcul de l'écart de vitesses ω*_{C}*-ω entre la valeur de consigne de la vitesse de rotation ω*_{C}* du ventilateur fournie par le dispositif de commande 14 illustré à la figure 3 et la vitesse de rotation ω du ventilateur, un module 21 de comparaison de la valeur absolue de cet écart de vitesses Δω *=*|ω*_{C}-*ω| avec une valeur seuil S₁, un module d'activation 22 permettant de fournir une vitesse de rotation ω*ₘ* au ventilateur 2 supérieure à la consigne de vitesse de rotation ω*_{C}*, de manière à créer un à coup de couple. Le dispositif de contrôle 15 comprend également un module 23 de comparaison de la température extérieure Tₐ avec une valeur seuil T₅, et un module 24 de comparaison de la température extérieure Tₐ avec une valeur seuil T₆.

Une fois le ventilateur 2 activé par le dispositif de commande 14 illustré à la figure 3, le module 20 calcule l'écart de vitesses Δω entre la valeur de consigne de la vitesse de rotation ω*_{c}*, du ventilateur et la vitesse de rotation ω du ventilateur.

Le module 21 de comparaison compare la valeur absolue de cet écart de vitesses Δω avec une valeur seuil S₁. Lorsque la valeur absolue de l'écart de vitesses Δω est inférieure ou égale à la valeur seuil S₁, le ventilateur est considéré comme fonctionnant normalement. Lorsque la valeur absolue de l'écart de vitesses Δω est supérieure à la valeur seuil S₁, le module 23 de comparaison compare la température extérieure Tₐ avec la valeur seuil T₅. Si la température extérieure Tₐ est inférieure à la valeur seuil T₅, on incrémente un compteur 25 d'activation du ventilateur. La valeur d'incrémentation X du compteur 25 est comparée à une valeur maximale maxₓ d'incrémentation d'activation déterminée au préalable. Si la valeur d'incrémentation X est inférieure à la valeur maximale maxₓ, un module d'activation 22 fournit une vitesse de rotation ω*ₘ* au ventilateur 2 supérieure à la consigne de vitesse de rotation ω*_{C}*, de manière à créer un à coup de couple et briser des éventuels ponts de glace créés entre les pales du ventilateur, puis on revient à la première étape de calcul de l'écart de vitesses ω*_{C}*-ω pour à nouveau vérifier le fonctionnement du ventilateur.

Si la valeur d'incrémentation X est supérieure ou égale à la valeur maximale max_{X}, on incrémente un compteur 26 de dégivrage. La valeur d'incrémentation Y du compteur 26 est comparée à une valeur maximale max_{Y} d'incrémentation de dégivrage déterminée au préalable. Si la valeur d'incrémentation Y est inférieure à la valeur maximale max_{Y}, un module 27 permet d'inverser le sens du flux du fluide frigorigène dans la pompe à chaleur de façon à fonctionner en mode climatisation. De cette manière, la température Tₛ en amont du ventilateur est réchauffée, ce qui permet de dégivrer le ventilateur. Puis on revient à la première étape de calcul de l'écart de vitesses ω *_{C}*-ω par le module 20.

Si la valeur d'incrémentation Y est supérieure à la valeur maximale max_{Y}, un module 28 arrête le ventilateur et enregistre le blocage du ventilateur. Le module 24 de comparaison compare la température extérieure Tₐ avec la valeur seuil T₆. Si la température extérieure Tₐ est supérieure à la valeur seuil T_{5,} on revient à l'entrée du module d'activation 22 de manière à créer à nouveau un à coup de couple. Si dans ces conditions, le ventilateur ne répond pas, un voyant orange (non représenté) peut s'allumer sur le tableau de bord du véhicule.

A titre d'exemple non limitatif, la valeur de la température seuil T₅ peut être de zéro degrés Celsius, et la valeur de la température seuil T₆ peut être de dix degrés Celsius.

Grâce au système et procédé qui viennent d'être décrits, dès qu'un risque de gel est détecté, le ventilateur est mis en route de façon à assurer une répartition homogène du givre sur les pales du ventilateur et d'éviter son blocage par la création d'un pont de glace. De plus, le fonctionnement du ventilateur est surveillé par un module de contrôle de sorte que si le ventilateur n'est pas mis en rotation comme demandé, le système crée une demande de vitesse de rotation brusque de manière à créer un à coup de couple et éventuellement rompre le blocage créé par le givre. Et si le ventilateur ne démarre toujours pas, la pompe à chaleur sera basculée en mode climatisation de manière à envoyer de l'air chaud sur le ventilateur. Ce système permet également de détecter toute apparition de givre en fonction de la vitesse de rotation du ventilateur. En effet, si la vitesse de rotation est fortement réduite, la vitesse de rotation du ventilateur est également augmentée pour éliminer le givre des pales du ventilateur.

## Revendications

1. Système de commande (1) d'un ventilateur (2) dans un véhicule automobile, le ventilateur (2) coopérant avec au moins un échangeur de chaleur (4) dans lequel circule un fluide frigorigène, le système de commande comprenant un moyen de détermination (11) de la température extérieure (Tₐ), un moyen de détermination (12) de la température (Tₛ) entre l'échangeur (4) et le ventilateur (2) et une unité de contrôle électronique (9) et un dispositif de contrôle (15) du ventilateur (2), **caractérisé en ce que** l'unité de contrôle électronique (9) comporte une cartographie (13) de détermination de zones (R) à risque de gel du ventilateur en fonction de la température extérieure (Tₐ) et de la température (Tₛ) en amont du ventilateur et comprend un dispositif de commande (14) du ventilateur (2) apte à activer le ventilateur (2) en fonction du risque (R) de gel déterminé par la cartographie (13).

2. Système de commande (1) d'un ventilateur (2) selon la revendication 1, dans lequel le dispositif de contrôle (15) du ventilateur (2) comprend un moyen de détermination (20) d'une différence de vitesses de rotation (ω*_{C}*-ω) entre la vitesse de rotation (ω) du ventilateur (2) et une valeur de consigne (ω*_{C}*) de vitesse de rotation, un moyen de comparaison (21) de la différence de vitesse (ω*_{C}*-ω) de rotation avec une valeur seuil (S₁), un moyen d'activation (22) apte à fournir une vitesse de rotation (ω*ₘ*) au ventilateur (2) supérieure à la valeur de consigne (ω*_{C}*) de vitesse de rotation.

3. Système de commande (1) d'un ventilateur (2) selon l'une des revendications précédentes, dans lequel le ventilateur (2) est adapté à un dispositif de pompe à chaleur (3) comprenant un échangeur de chaleur externe (4), un échangeur de chaleur interne (5) dans lesquels circule un fluide frigorigène, le ventilateur (2) étant situé entre lesdits échangeurs de chaleur (4, 5).

4. Système de commande (1) d'un ventilateur (2) selon la revendication 3, dans lequel l'échangeur de chaleur externe (4) est un évaporateur dans lequel le fluide frigorigène prélève de la chaleur à l'air extérieur (Tₐ) et l'échangeur de chaleur interne (5) est un condenseur dans lequel le fluide frigorigène libère de la chaleur à l'air intérieur (Ti).

5. Système de commande (1) d'un ventilateur (2) selon la revendication 3, dans lequel le dispositif de contrôle (15) comprend un moyen de dégivrage (27) apte à faire fonctionner l'échangeur externe (4) en tant que condenseur et l'échangeur interne (5) en tant qu'évaporateur.

6. Procédé de commande d'un ventilateur (2) dans un véhicule automobile, le ventilateur (2) coopérant avec au moins un échangeur de chaleur (4) dans lequel circule un fluide frigorigène, dans lequel
- on détermine la température extérieure (Tₐ),
- on détermine la température (Tₛ) entre l'échangeur de chaleur (4) et le ventilateur (2),
- on active le ventilateur (2) en fonction de la température extérieure (Tₐ) et de la température (Tₛ) entre l'échangeur de chaleur (4) et le ventilateur (2),
- on détermine les zones à risque (R) de gel du ventilateur à partir d'une cartographie (13) en fonction de la température extérieure (Tₐ) et de la température (Tₛ) en amont du ventilateur, **caractérisé en ce que** :
- on commande le ventilateur (2) en fonction du risque (R) de gel déterminé par la cartographie, et
- on contrôle la vitesse de rotation (ω) du ventilateur (2).

7. Procédé de commande d'un ventilateur (2) selon la revendication 6, dans lequel :
- on détermine une différence de vitesse de rotation (ω*_{C}*-ω) entre la vitesse de rotation du ventilateur (2) et une valeur de consigne (ω*_{C}*) de vitesse de rotation,
- on compare la différence de vitesse de rotation (ω*_{C}*-ω) avec une valeur seuil (S₁).

8. Procédé de commande de commande d'un ventilateur (2) selon la revendication 7, dans lequel lorsque la différence de vitesses rotation (ω*_{C}*-ω) est supérieure à la valeur seuil (S₁), on fournit une vitesse de rotation (ω*ₘ*) au ventilateur supérieure à la valeur de consigne (ω*_{C}*) de vitesse de rotation, de manière à créer un à coup de couple et on compare à nouveau la différence de vitesse de rotation (ω*_{C}*-ω) avec la valeur seuil (S₁).

9. Procédé de commande d'un ventilateur (2) selon l'une des revendications 6 à 8, dans lequel le ventilateur (2) est adapté à un dispositif de pompe à chaleur (3) comprenant un échangeur de chaleur externe (4), un échangeur de chaleur interne (5) dans lesquels circule un fluide frigorigène, le ventilateur (2) étant situé entre lesdits échangeurs de chaleur (4, 5).

10. Procédé de commande d'un ventilateur (2) selon la revendication 9, dans lequel on fait fonctionner l'échangeur de chaleur externe (4) en tant qu'évaporateur de manière à prélever de la chaleur à l'air extérieur (Tₐ) et l'échangeur de chaleur interne (5) en tant que condenseur de manière à libérer de la chaleur à l'air intérieur (Ti).

11. Procédé de commande d'un ventilateur (2) selon la revendication 9, dans lequel on active un moyen de dégivrage (27) apte à faire fonctionner l'échangeur externe (4) en tant que condenseur et l'échangeur interne (5) en tant qu'évaporateur.

## Patentansprüche

1. System (1) zum Steuern eines Ventilators (2) in einem Kraftfahrzeug, wobei der Ventilator (2) mit mindestens einem Wärmetauscher (4) zusammenwirkt, in dem ein Kühlmittel zirkuliert, wobei das Steuersystem eine Ermittlungseinrichtung (11) der Außentemperatur (Tₐ), eine Ermittlungseinrichtung (12) der Temperatur (Tₛ) zwischen dem Tauscher (4) und dem Ventilator (2) und eine elektronische Überwachungseinheit (9) und eine Überwachungseinrichtung (15) des Ventilators (2) enthält, **dadurch gekennzeichnet, dass** die elektronische Überwachungseinheit (9) eine Kartierung (13) zur Ermittlung von Zonen (R) mit Frostgefahr des Ventilators abhängig von der Außentemperatur (Tₐ) und der Temperatur (Tₛ) vor dem Ventilator aufweist und eine Steuervorrichtung (14) des Ventilators (2) enthält, die den Ventilator (2) abhängig von der durch die Kartierung (13) ermittelten Frostgefahr (R) aktivieren kann.

2. Steuersystem (1) eines Ventilators (2) nach Anspruch 1, wobei die Überwachungseinrichtung (15) des Ventilators (2) eine Ermittlungseinrichtung (20) einer Differenz von Drehgeschwindigkeiten (ω_{c}-ω) zwischen der Drehgeschwindigkeit (ω) des Ventilators (2) und einem Drehgeschwindigkeitssollwert (ω_{c}), eine Vergleichseinrichtung (21) der Drehgeschwindigkeitsdifferenz (ω_{c}-ω) mit einem Schwellwert (S₁) und eine Aktivierungseinrichtung (22) enthält, die eine Drehgeschwindigkeit (ωₘ) an den Ventilator (2) liefern kann, die höher ist als der Drehgeschwindigkeitssollwert (ω_{c}).

3. Steuersystem (1) eines Ventilators (2) nach einem der vorhergehenden Ansprüche, wobei der Ventilator (2) an eine Wärmepumpenvorrichtung (3) angepasst ist, die einen externen Wärmetauscher (4) und einen internen Wärmetauscher (5) enthält, in denen ein Kühlmittel zirkuliert, wobei der Ventilator (2) sich zwischen den Wärmetauschern (4, 5) befindet.

4. Steuersystem (1) eines Ventilators (2) nach Anspruch 3, wobei der externe Wärmetauscher (4) ein Verdampfer ist, in dem das Kühlmittel Wärme aus der Außenluft (Tₐ) entnimmt, und der interne Wärmetauscher (5) ein Kondensator ist, in dem das Kühlmittel Wärme an die Innenluft (Tᵢ) freigibt.

5. Steuersystem (1) eines Ventilators (2) nach Anspruch 3, wobei die Überwachungseinrichtung (15) eine Enteisungseinrichtung (27) enthält, die den externen Tauscher (4) als Kondensator und den internen Tauscher (5) als Verdampfer betreiben kann.

6. Steuerverfahren eines Ventilators (2) in einem Kraftfahrzeug, wobei der Ventilator (2) mit mindestens einem Wärmetauscher (4) zusammenwirkt, in dem ein Kühlmittel zirkuliert, wobei
- die Außentemperatur (Tₐ) ermittelt wird,
- die Temperatur (Tₛ) zwischen dem Wärmetauscher (4) und dem Ventilator (2) ermittelt wird,
- der Ventilator (2) abhängig von der Außentemperatur (Tₐ) und der Temperatur (Tₛ) zwischen dem Wärmetauscher (4) und dem Ventilator (2) aktiviert wird,
- die Frostgefahrzonen (R) des Ventilators ausgehend von einer Kartierung (13) abhängig von der Außentemperatur (Tₐ) und der Temperatur (Tₛ) vor dem Ventilator ermittelt werden,
**dadurch gekennzeichnet, dass**:
- der Ventilator (2) abhängig von der durch die Kartierung ermittelten Frostgefahr (R) gesteuert wird, und
- die Drehgeschwindigkeit (ω) des Ventilators (2) überwacht wird.

7. Steuerverfahren eines Ventilators (2) nach Anspruch 6, wobei:
- eine Drehgeschwindigkeitsdifferenz (ω_{c}-ω) zwischen der Drehgeschwindigkeit des Ventilators (2) und einem Drehgeschwindigkeitssollwert (ω_{c}) ermittelt wird,
- die Drehgeschwindigkeitsdifferenz (ω_{c}-ω) mit einem Schwellwert (S₁) verglichen wird.

8. Steuerverfahren eines Ventilators (2) nach Anspruch 7, wobei, wenn die Drehgeschwindigkeitsdifferenz (ω_{c}-ω) höher als der Schwellwert (S₁) ist, eine Drehgeschwindigkeit (ωₘ) an den Ventilator geliefert wird, die höher ist als der Drehgeschwindigkeitssollwert (ω_{c}), um einen Drehmomentstoß zu erzeugen, und die Drehgeschwindigkeitsdifferenz (ω_{c}-ω) erneut mit dem Schwellwert (S₁) verglichen wird.

9. Steuerverfahren eines Ventilators (2) nach einem der Ansprüche 6 bis 8, wobei der Ventilator (2) an eine Wärmepumpenvorrichtung (3) angepasst ist, die einen externen Wärmetauscher (4) und einen internen Wärmetauscher (5) enthält, in denen ein Kühlmittel zirkuliert, wobei der Ventilator (2) sich zwischen den Wärmetauschern (4, 5) befindet.

10. Steuerverfahren eines Ventilators (2) nach Anspruch 9, wobei der externe Wärmetauscher (4) als Verdampfer betrieben wird, um Wärme aus der Außenluft (Tₐ) zu entnehmen, und der interne Wärmetauscher (5) als Kondensator betrieben wird, um Wärme in die Innenluft (Tᵢ) freizugeben.

11. Steuerverfahren eines Ventilators (2) nach Anspruch 9, wobei eine Enteisungseinrichtung (27) aktiviert wird, die den externen Tauscher (4) als Kondensator und den internen Tauscher (5) als Verdampfer betreiben kann.

## Claims

1. Control system (1) of a fan (2) in a motor vehicle, the fan (2) cooperating with at least one heat exchanger (4) in which a coolant fluid flows, the control system including means (11) for determining the external temperature (Tₐ), means (12) for determining the temperature (Tₛ) between the exchanger (4) and the fan (2) and an electronic control unit (9) and a control device (15) of the fan (2), **characterized in that** the electronic control unit (9) includes a map (13) for determining regions (R) of the fan at risk of icing up as a function of the external temperature (Tₐ) and the temperature (Tₛ) upstream of the fan and includes a control device (14) of the fan (2) adapted to activate the fan (2) as a function of the risk (R) of icing up determined by the map (13).

2. Control system (1) according to Claim 1 of a fan (2), wherein the control device (15) of the fan (2) includes means (20) for determining a rotation speed difference (ω_{c}-ω) between the rotation speed (ω) of the fan (2) and a rotation speed setpoint value (ω_{c}), means (21) for comparing the rotation speed difference (ω_{c}-ω) with a threshold value (S₁), activation means (22) adapted to provide a rotation speed (ωₘ) to the fan (2) greater than the rotation speed setpoint value (ω_{c}).

3. Control system (1) according to either of the preceding claims of a fan (2), wherein the fan (2) is fitted to a heat pump device (3) including an external heat exchanger (4), an internal heat exchanger (5) in which a coolant fluid flows, the fan (2) being situated between said heat exchangers (4, 5).

4. Control system (1) according to Claim 3 of a fan (2), wherein the external heat exchanger (4) is an evaporator in which the coolant fluid takes up heat from the external air (Tₐ) and the internal heat exchanger (5) is a condenser in which the coolant fluid releases heat to the internal air (Tᵢ).

5. Control system (1) according to Claim 3 of a fan (2), wherein the control device (15) includes de-icing means (27) adapted to operate the external heat exchanger (4) as a condenser and the internal heat exchanger (5) as an evaporator.

6. Method of controlling a fan (2) in a motor vehicle, the fan (2) cooperating with at least one heat exchanger (4) in which a coolant fluid flows, wherein
- the external temperature (Tₐ) is determined,
- the temperature (Tₛ) between the heat exchanger (4) and the fan (2) is determined,
- the fan (2) is activated as a function of the external temperature (Tₐ) and the temperature (Tₛ) between the heat exchanger (4) and the fan (2),
- regions (R) of the fan at risk of icing up are determined from a map (13) as a function of the external temperature (Tₐ) and the temperature (Tₛ) upstream of the fan, **characterized in that**:
- the fan (2) is controlled as a function of the risk (R) of icing up determined by the map, and
- the rotation speed (ω) of the fan (2) is controlled.

7. Method according to Claim 6 of controlling a fan (2), wherein:
- a rotation speed difference (ω_{c}-ω) between the rotation speed of the fan (2) and a rotation speed setpoint value (ω_{c}) is determined,
- the rotation speed difference (ω_{c}-ω) is compared with a threshold value (S₁) .

8. Method according to Claim 7 of controlling a fan (2), wherein when the rotation speed difference (ω_{c}-ω) is greater than the threshold value (S₁) a rotation speed (ωₘ) is supplied to the fan greater than the rotation speed setpoint value (ω_{c}) so as to create a step change in torque and the rotation speed difference (ω_{c}-ω) is again compared with the threshold value (S₁) .

9. Method according to any one of Claims 6 to 8 of controlling a fan (2), wherein the fan (2) is fitted to a heat pump device (3) including an external heat exchanger (4), an internal heat exchanger (5) in which a coolant fluid flows, the fan (2) being situated between said heat exchangers (4, 5).

10. Method according to Claim 9 of controlling a fan (2), wherein the external heat exchanger (4) is operated as an evaporator so as to take up heat from the external air (Tₐ) and the internal heat exchanger (5) is operated as a condenser so as to release heat to the internal air (Tᵢ).

11. Method according to Claim 9 of controlling a fan (2), wherein de-icing means (27) adapted to operate the external heat exchanger (4) as a condenser and the internal heat exchanger (5) an evaporator are activated.
